# EUROPEAN PATENT APPLICATION

(11) **EP 0 955 518 A2**
(43) Date of publication of application: **10.11.1999**
(21) Application number: 99302778.8
(22) Date of filing: 09.04.1999
(51) Int. Cl.: G01B 15/02

(54) **Furnace lining measurement**

(30) Priority: 29.04.1998 GB 9809040
(71) Applicant: Harwell Instruments Ltd, Manchester, Lancashire M2 3AB (GB)
(72) Inventor: Wormald, Malcolm Roderic, Abingdon, Oxfordshire OX14 2DA (GB); Syme, Duncan Brian Condie Brown, Wantage, Oxfordshire OX12 7EP (GB)
(74) Representative: Mansfield, Peter Turquand

(57) **Abstract**

The thickness of a lining (12) of a furnace is measured by irradiating the lining with pulses of fast neutrons from a source (20), and detecting with a detector (22) radiation from the lining (12) received in the interval after one such neutron pulse and before the next neutron pulse. Radiation may be counted, for example, between 4 ms and 10 ms after a pulse. Such delayed counts are due to neutrons which have diffused through a large thickness of the liner (12), and so enable the thickness to be determined. Wear or erosion of the liner (12) can thus be monitored.

## Description

This invention relates to a method and to an instrument for measuring the thickness of a lining of a furnace.

Furnaces for the production of steel commonly have a graphite lining within a steel shell, and the graphite may for example be in excess of one metre thick. The graphite is a refractory material but will gradually become worn away during operation, and it would be desirable to be able to measure the thickness of the lining during operation of the furnace, to monitor this wear. One device for measuring the thickness of such a refractory lining is described in GB 2 049 166 B (Galkin et al.), which irradiates the lining with fast neutrons, and detects the scattered and decelerated neutrons. However, a more accurate instrument would be desirable.

According to the present invention there is provided an instrument for measuring the thickness of a lining of a furnace, the instrument comprising a neutron source arranged to irradiate the lining with pulses of neutrons, at least one means to detect radiation from the lining, the detection means being spaced apart from the irradiation source, and being arranged to provide a count rate signal corresponding to the radiation received during a time interval after one such neutron pulse and before the next neutron pulse, and means to determine from the count rate signal the thickness of the lining.

Each neutron pulse preferably has a duration no more than 1.0 ms, more preferably not more than 0.1 ms. The neutron source may emit neutrons continuously during each such pulse, and may emit fast neutrons of energy above 10 MeV, for example 14 MeV. The time interval in which the count rate signal is determined may be between 0.5 ms and 16 ms after a neutron pulse; the time interval is preferably between 1.0 ms and 10.0 ms, more preferably between 2.0 ms and 6.0 ms after each neutron pulse. Such delayed counts are due to neutrons which have diffused through a large thickness of graphite, and so are indicative of the graphite thickness.

The detector may detect thermal neutrons if no neutron absorbing material is between the graphite and the detector, or gamma rays. If the detector is a gamma detector it detects gamma rays due to thermal neutron capture in the lining itself, and also those arising from thermal neutron capture in the adjacent parts of any steel casing around the lining, as such a steel casing is an effective thermal neutron absorber. There may be two detectors placed at different distances from the source. The count rate signal may represent the total amount of radiation detected during that interval, or alternatively the count rate signal may indicate how the detected radiation varies with time during that interval. For example, the count rate signal might indicate the amounts of radiation detected in two or three successive intervals, for example the intervals 1.5 ms to 2.0 ms, 4.0 ms to 4.5 ms, and 6.0 ms to 6.5 ms, after each pulse of neutrons.

The invention also provides a method for measuring the thickness of a lining of a furnace, the method comprising arranging a neutron source to irradiate the lining with pulses of neutrons, detecting radiation from the lining at at least one position spaced apart from where the irradiation occurs, and hence measuring a count rate signal corresponding to the radiation received during a time interval after one such neutron pulse and before the next neutron pulse, and determining from the count rate signal the thickness of the lining.

The invention will now be further and more particularly described, by way of example only, and with reference to the accompanying drawings, in which:
Figure 1 shows a diagrammatic sectional view of an instrument for measuring the thickness of a graphite furnace liner; and
Figure 2 shows graphically the variation with time, after a neutron pulse, of the cumulative fraction of detected thermal neutrons, as predicted by a computer program simulating the operation of the instrument of figure 1.

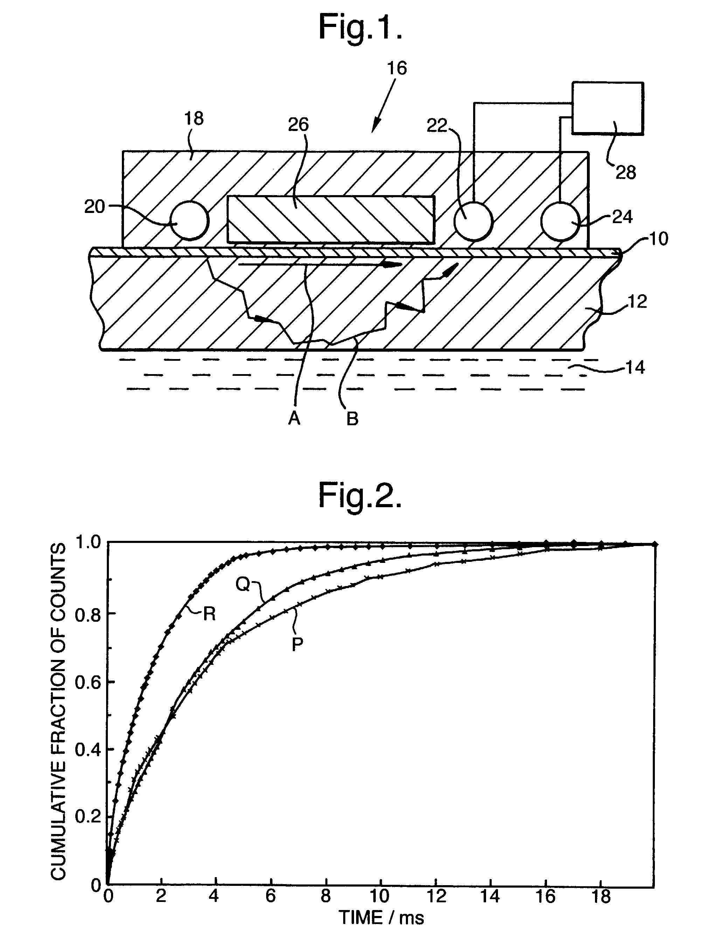

Referring to figure 1, part of the wall of a blast furnace is shown, the wall comprising a thin steel shell 10 within which is a layer of graphite 12 (initially 2 m thick), within which is the molten iron 14. An instrument 16 is placed adjacent to the shell 10, the instrument 16 comprising a generally rectangular, 1.3 m long, radiation shield 18 of boron-loaded polythene. Near one end of the shield 18 is a pulsed neutron source 20; towards the opposite end of the shield 18 are two gamma ray detectors 22 and 24, one at a distance of 0.9 m from the source 20, and the other at a distance of 1.25 m from the source 20. Between the source 20 and the nearer detector 22 is a 0.8 m long shielding block 26 consisting of a stack of sheets of boron-loaded polythene, lead, and iron. The detectors 22 and 24 are coupled electrically to a calculation and display unit 28.

In operation of the instrument 16 it is placed adjacent to the shell 10 of the blast furnace wall as shown. The neutron source 20 is energised to produce 100 pulses of 14 MeV fast neutrons per second, each of duration 0.025 ms, and 10⁵ neutrons per pulse. The signals from the detectors 22 and 24 are supplied to the unit 28, this unit including a time gate so as to count only those signals which occur after 2.0 ms after a neutron pulse, and before emission of the next neutron pulse. The count signals so obtained enable the graphite thickness to be determined.

The fast neutrons emitted by the source 20, initially of energy 14 MeV, propagate through the thin steel shell 10 and so into the graphite 12 within which they become thermalised (i.e. of energy less than 0.4 eV); they diffuse in all directions through the graphite, occasionally undergoing capture reactions so that gamma rays are emitted. Any neutrons which diffuse into the molten iron 14 are rapidly captured, and any which diffuse into the steel shell 10 are also captured, with the emission of gamma rays. Consequently each detector 22 and 24 initially detects large numbers of gamma rays due to thermal neutrons which have diffused through the graphite along the shortest possible path, near the outer surface (see arrow A). This diffusion process is a random process. Gamma rays which are detected a few ms after the pulse must be due to thermal neutrons which have travelled further in the graphite 12, and which are consequently more likely to have diffused to greater depths (such as the path indicated by arrows B). Hence the way in which the count rate decreases with time after each pulse enables the thickness of the graphite to be determined.

This is illustrated by figure 2, to which reference is now made, which shows graphically how the cumulative fraction of thermal neutron count incident on the shell 10 immediately next to the detector 22 increases with time after a neutron pulse from the source 20. The graph shows results obtained by means of a computer simulation. Results are shown for three different thicknesses of graphite: 1.50 m (Graph P), 1.00 m (Graph Q), and 0.50 m (Graph R). It will be noticed that with the thinnest layer of graphite almost all the counts are received in less than 5 ms, whereas with the thicker layers a significant proportion of the counts are received at later times.

The separation between the neutron source 20 and the detectors 22 or 24 is preferably similar to the expected graphite thcikness, say between a half and twice the expected thickness. If an even thicker layer of graphite is to be monitored then it may be more convenient for the source and the detector to be physically separate. Where two spaced-apart detectors 22 and 24 are provided, their signals may be analysed separately, or the ratio between their count rates might be monitored. The detector 24 at greater separation from the source 20 receives radiation over a longer period of time, and so provides more accurate data if the graphite is thicker; but its count rates are lower, so it provides less statistical accuracy.

## Claims

1. An instrument (16) for measuring the thickness of a lining (12) of a furnace, the instrument (16) comprising a neutron source (20) arranged to irradiate the lining (12) with neutrons, and at least one means (22, 24) to detect radiation from the lining (12), the detection means (22, 24) being spaced apart from the irradiation source (20), and characterised by the source (20) emitting pulses of neutrons, and the detection means (20, 24) being arranged to provide a count rate signal corresponding to the radiation received during a time interval after one such neutron pulse and before the next neutron pulse, and the instrument (16) comprising means (28) to determine from the count rate signal the thickness of the lining (12).

2. An instrument as claimed in claim 1 wherein each neutron pulse has a duration no more than 1.0 ms.

3. An instrument as claimed in claim 1 or claim 2 wherein the time interval in which the count rate signal is determined is between 0.5 ms and 16 ms after a neutron pulse.

4. An instrument as claimed in claim 3 wherein the time interval is between 2.0 ms and 6.0 ms after each neutron pulse.

5. An instrument as claimed in any one of the preceding claims wherein the count rate signal indicates how the received radiation varies with time during the time interval.

6. An instrument as claimed in any one of the preceding claims wherein the detector (22, 24) detects gamma rays.

7. An instrument as claimed in any one of the preceding claims including two detectors (22, 24) placed at different distances from the source (20).

8. A method for measuring the thickness of a lining of a furnace, the method comprising arranging a neutron source (20) to irradiate the lining with neutrons, detecting radiation from the lining (12) at at least one position (22, 24) spaced apart from where the irradiation occurs, characterised by irradiating with pulses of neutrons, and by measuring a count rate signal corresponding to the radiation received during a time interval after one such neutron pulse and before the next neutron pulse, and determining from the count rate signal the thickness of the lining (12).

9. A method as claimed in claim 8 in which the time interval is between 0.5 ms and 16 ms after a neutron pulse.

10. A method as claimed in claim 8 or claim 9 in which the count rate signal indicates how the received radiation varies with time during the time interval.
